# EUROPEAN PATENT APPLICATION

(11) **EP 4 523 772 A1**
(43) Date of publication of application: **19.03.2025**
(21) Application number: 23203884.4
(22) Date of filing: 16.10.2023
(51) Int. Cl.: B01D 3/00, B01D 3/20, B01D 53/18

(54) **LIQUID DISTRIBUTOR SYSTEM FOR A SEPARATION DEVICE WITH EXCELLENT LIQUID MIXING AND LIQUID DISTRIBUTION PERFORMANCES**

(30) Priority: 15.09.2023 WO PCT/CN2023/119178
(71) Applicant: Sulzer Management AG, 8401 Winterthur (CH)
(72) Inventor: BACHMANN, Christian, 8548 Ellikon an der Thur (CH); DONG, Jiao Jiao, Shanghai 201400 (CN); YANG, Quan, Singapore 689102 (SG); ZHOU, Qian, Shanghai 200000 (CN)
(74) Representative: IPS Irsch AG

(57) **Abstract**

A liquid distributor system for a separation device, such as for a mass transfer column, in particular for a packing column for absorption, stripping, scrubbing or distillation, wherein the liquid distributor system comprises:
- a liquid collection means comprising one or more collector members, each of which comprising one or more discharge openings,
- a liquid distribution means comprising one or more distributor members comprising a plurality of discharge openings and
- at least one mixing trough comprising a plurality of discharge openings, wherein the at least one mixing trough is arranged below the liquid collection means so that liquid being contained in the one or more collector members of the liquid collection means flows through at least one of the one or more discharge openings of the one or more collector members into the at least one mixing trough, wherein the at least one mixing trough is arranged so that liquid being contained in the at least one mixing trough flows through at least one of the plurality of discharge openings of the at least one mixing trough into the liquid distribution means, and wherein the number of discharge openings and/or the surface area of the discharge openings of the at least one mixing trough are unevenly distributed.

## Description

The present invention relates to a liquid distributor system for a separation device, such as for a mass transfer column, for instance for a packing column for absorption, stripping, scrubbing or distillation and in particular for an air separation unit. Moreover, the present invention relates to a mass transfer column, for example for absorption, stripping, scrubbing or distillation, and in particular to an air separation unit, which comprises such a liquid distributor system as well as to a method for separating at least two fluids, preferably for performing an absorption, stripping, scrubbing or distillation and more preferably for air separation, which uses at least such a column.

Separation devices, such as mass transfer columns, are employed for an intensive gas-liquid or liquid-liquid contact in a wide variety of processes, such as in particular absorption, stripping, scrubbing, distillation, extraction and the like. Distillation columns, for example, are designed to separate a specific substance from a liquid mixture comprising two or more substances by selective evaporation and condensation. For this purpose, distillation columns comprise a boiler at the bottom and a condenser at the top so that during the operation vapour rises upwardly and liquid descends so as to enable a gas-liquid contact for effecting the mass transfer between both phases. The substance with the higher boiling point will concentrate in the liquid phase, wherein the substance with the lower boiling point will concentrate in the gas phase. In order to achieve an intensive gas-liquid contact, such columns are typically filled with an internal to optimize the gas-liquid mass transfer. Examples for such an internal are packings, for instance random packings and structured packings. Typically, a column comprises a plurality of packing beds being arranged - spaced apart - on top of each other.

A specific example for a system comprising several mass transfer columns is an air separation unit (ASU), which typically comprises several distillation columns, namely a high-pressure distillation column (HP), a low-pressure distillation column (LP), a crude argon distillation column (CAR) and a pure argon distillation column (PAR), all of which are operated in the temperature range between 80 and 100 K. Today, those columns are dominantly equipped with structured packings. To minimize the refrigeration losses, which have to be compensated by performing additional work, all cold parts are arranged inside a "cold box". This is a container made up of a steel frame work with sheets and filled with insulating materials. The height of the twin column with the LP on the top of the HP column defines the necessary height of the cold box while the CAR column of around 195 numbers of theoretical stages is usually split into two columns inside the cold box due to the practical height limit of the cold box. Besides local government regulations and transportation constraints, the height of the cold box is associated with heat leak into the cryogenic system, the higher the height is, the higher the heat leakage. In addition, liquid transfer from the HP column to the LP column may require liquid pumping or vapor lift, adding complexity and inefficiency to the process. Vapor lift is the term used to describe the combination of a lower density stream, which is normally vapor, with a higher density stream, which is normally liquid, so as to reduce the mean fluid density and thus reduce the hydrostatic head contribution to pressure drop when transporting the stream to a higher elevation. Therefore, there are incentives to reduce column height in ASU, particularly for mega capacity units. Apart from the high efficiency structured packings, lower height column internals can also serve the purpose.

A structured packing bed typically comprises several layers being stacked vertically above each other, wherein each layer is composed of one or more structured packing elements. The higher the diameter of the structured packing bed, the higher the number of structured packing elements per layer. The structured packings elements serve for the improvement of the mass transfer and/or heat exchange between at least two fluid phases of different density. The structured packing elements comprise a plurality of different sheets, each of which providing surface area for the heavier phase that trickles down along the surface of the sheet and spreads. In addition, between the different sheets of the structured packing elements open spaces are provided, which are filled with the light phase (e.g. vapor or gas in distillation) and provide a path for the light phase to ascend, while it is driven by a pressure gradient. The pressure gradient is required to overcome the flow resistance. In the typical case of counter-current flow, the average flow direction of the light phase is from bottom to top of the structured packing element and thus opposite to the average flow direction of the heavy phase. By allowing the one heavy phase to spread on the surface of the structured packing elements, an interface is created between the at least two phases so that an efficient heat and mass transfer between the phases is established at the interface. As set out above, a mass transfer column usually comprises several beds of structured packing elements being arranged - spaced apart - on top of each other.

A typical drawback of mass transfer columns is a maldistribution of the liquid or liquid/gas mixture, respectively, over the cross-sections of the mass transfer column, which is known as a phenomenon leading to a lower separation efficiency. The maldistribution may be a concentrational and/or a compositional maldistribution, i.e. the liquid or liquid/gas mixture, respectively, has different concentrations and/or has different concentrations at different locations across the horizontal cross-section of the mass transfer column. This disadvantage is particularly relevant for comparable large mass transfer columns, such as for mass transfer columns having a diameter of at least 3 meters or even of at least 5 meters. In order to reduce the degree of maldistribution in mass transfer columns, it has been already proposed to arrange liquid distributors above the top of each packing bed in the mass transfer column. Liquid distributors being provided above the top of a packing bed, which is arranged below an upper packing bed, are also referred to as liquid redistributors, because they redistribute the liquid exiting the upper packing bed. Subsequently, distributors and redistributors are uniformly denoted as distributors, distributor means or the like.

Such a liquid distributor typically comprises, seen from top to bottom of the liquid distributor, a liquid collection means, a mixing means and a distribution means. The liquid collection means usually comprises several collection channels for collecting the unevenly distributed liquid from the above packing bed over the whole cross-section of the mass transfer column. These collection channels have drain openings for transferring the collected liquid to the below mixing means, which comprises for instance an annular sump, into which the collected liquid is transferred via the drain openings and one or more downcomers, such as downcomer pipes, from the collector means, and optionally one or more chordal sumps, all of which are configured to mix the liquid as homogeneous as possible. The so mixed liquid is then transferred to the below distribution means for distributing the liquid as evenly as possible over the horizontal cross-section, from which the liquid drops down to the lower packing bed. However, such a liquid distributor has a comparable high height. In order to reduce the height of the liquid distributor, liquid distributors have been proposed, in which the mixing means is omitted. Even if such a liquid distributor has a drastically reduced height, its performance is improvable because it is characterized by a comparable low liquid mixing performance.

All in all, the known liquid distributors are not efficient enough to reduce with a comparable low height, which is a prerequisite to be used in an air separation unit, the maldistribution sufficiently so as to ensure an optimal separation efficiency, even for comparable large mass transfer columns, such as for mass transfer columns having a diameter of at least 3 meters or even of at least 5 meters. More specifically, the known liquid distributors have at least one of the drawbacks of comparable high height, of an improvable liquid distribution uniformity and of an improvable liquid mixing performance.

In view of this it is an object of the present invention to provide a liquid distributor system for a mass transfer column having a comparable low height and being thus in particularly suitable to be used in an air separation unit, which nevertheless leads - in particular if used in a mass transfer column having a comparable high height and/or high diameter - to an optimal liquid distribution uniformity over the horizontal cross-section of the mass transfer column as well as to an optimal liquid mixing performance.

This object is satisfied in accordance with the present patent application by providing a liquid distributor system for a separation device, such as for a mass transfer column, in particular for a packing column for absorption, stripping, scrubbing or distillation, wherein the liquid distributor system comprises:
- a liquid collection means comprising one or more collector members, each of which comprising one or more discharge openings,
- a liquid distribution means comprising one or more distributor members comprising a plurality of discharge openings and
- at least one mixing trough comprising a plurality of discharge openings,
wherein the at least one mixing trough is arranged (seen in the vertical direction), below the liquid collection means so that liquid being contained in the one or more collector members of the liquid collection means flows through at least one of the one or more discharge openings of the one or more collector members into the at least one mixing trough, wherein the at least one mixing trough is arranged so that liquid being contained in the at least one mixing trough flows through at least one of the plurality of discharge openings of the at least one mixing trough into the liquid distribution means, and wherein the number of discharge openings and/or the surface area of the discharge openings of the at least one mixing trough are unevenly distributed.

Thereby, a liquid distributor system for a mass transfer column is provided, which has a comparable low height and nevertheless leads - in particular if used in a mass transfer column having a comparable high height and/or high diameter - to an optimal liquid distribution uniformity over the horizontal cross-section of the mass transfer column as well as to an optimal liquid mixing performance. On account of these reasons, liquid distributor system in accordance with the present invention is particularly suitable to be used in an air separation unit. While the collection means efficiently collects the liquid flowing down from above into the liquid distributor system and transfers the collected liquid into the at least one mixing trough, and while the liquid distribution means efficiently and homogeneously distributes the liquid having been mixed in the at least one mixing trough over the whole horizontal cross-section of the liquid distributor system, the at least one mixing trough allows - on account of the uneven distribution of the discharge openings of the at least one mixing trough - to efficiently mix the liquid, even at a low height of the at least one mixing trough. This is due to the fact that, as set out in further detail below, the uneven distribution of the discharge openings of the at least one mixing trough leads to a controlled horizontal liquid flow having a controlled horizontal liquid flow velocity of the liquid in the at least one mixing trough, which leads to a particular efficient mixing of the liquid within the at least one mixing trough, wherein the at least one mixing trough only requires a low height. On account of this reason, the liquid distributor system in accordance with the present invention allows to achieve an optimal liquid distribution uniformity over the horizontal cross-section of the liquid distributor system as well as to achieve an optimal liquid mixing performance at a minimal height of the liquid distributor system. Therefore, the liquid distributor system in accordance with the present invention is particularly suitable to be used between adjacent structured or random packing beds of a mass transfer column for collecting, mixing and distributing liquid from an upwardly arranged packing and transferring it to a downwardly arranged packing, such as in particular in an air separation unit. Such a liquid distributor system may be also called liquid redistributor system. However, as set out above subsequently distributors and redistributors are uniformly denoted as distributors, distributor means and the like.

Vertical direction means the direction from the top to the bottom of the liquid distributor system referred to the orientation of the liquid distributor system as it is placed into the mass transfer column, i.e. the direction from the uppermost plane of the liquid collection means to the lowermost plane of the liquid distribution means.

In accordance with the present invention, the liquid distributor system comprises at least one mixing trough. The present invention is not particularly limited concerning the geometry and dimensions of the at least one mixing trough. Preferably, the at least one mixing trough of the liquid distributor system has four side walls and a bottom wall, wherein the plurality of discharge openings is provided in the bottom wall. Even more preferably, at least one mixing trough has the form of a hollow trough having four side walls and a bottom wall being liquid-tightly connected with each other, wherein the plurality of discharge openings is provided in the bottom wall, wherein the top surface of the at least one mixing trough being opposite to the bottom wall is open. It is further preferred that all walls are liquid-tightly connected with each other. If the liquid distributor system comprises two or more mixing troughs, preferably all of the mixing troughs have the form of a hollow trough having four side walls and a bottom wall being liquid-tightly connected with each other, wherein the plurality of discharge openings is provided in the bottom wall.

In principle, the present invention is not particularly limited concerning the shape of the mixing trough. For instance, the at least one mixing trough may have a square, rectangular, trapezoidal, oval, polygonal or irregular cross-section, i.e. the bottom wall may have, seen in top view, a square, rectangular, trapezoidal, oval, polygonal or irregular cross-section. If the liquid distributor system comprises two or more mixing troughs, preferably all of the mixing troughs have a respective cross-section. More preferably, the at least one mixing trough has a square or rectangular cross-section and most preferably a rectangular cross-section.

As set out above, the liquid distributor system in accordance with the present invention allows to achieve an optimal liquid distribution uniformity over the horizontal cross-section of the liquid distributor system as well as to achieve an optimal liquid mixing performance at a minimal height of the liquid distributor system. Preferably, the height of the at least one mixing trough is 5 to 50 cm, more preferably 6 to 40 cm and most preferably 10 to 20 cm. Moreover, it is preferred that the width of the at least one mixing trough is 20 to 50 cm, more preferably 15 to 40 cm and most preferably 10 to 20 cm. This allows that the liquid distributor system has a height of 30 to 100 cm, more preferably 40 to 80 cm and most preferably 50 to 70 cm.

In accordance with the present invention, the at least one mixing trough is arranged, seen in the vertical direction, below the liquid collection means so that liquid being contained in the one or more collector members of the liquid collection means flows through one or more discharge openings of the one or more collector members into the at least one mixing trough, and wherein the at least one mixing trough is arranged so that liquid being contained in the at least one mixing trough flows through at least one of the plurality of discharge openings of the at least one mixing trough into the liquid distribution means. Preferably, the at least one mixing trough is arranged so that liquid being contained in the one or more collector members of the liquid collection means flows through at least 80%, more preferably at least 90% and most preferably all of the one or more discharge openings of the one or more collector members into the at least one mixing trough. Likewise, it is preferred that the at least one mixing trough is arranged so that liquid being contained in the at least one mixing trough flows through at least 80%, more preferably at least 90% and most preferably all of the plurality of discharge openings of the at least one mixing trough into the liquid distribution means.

In accordance with the present invention, the number of discharge openings and/or the surface area of the discharge openings of the at least one mixing trough are unevenly distributed. Preferably, the number of discharge openings and/or the surface area of the discharge openings of the at least one mixing trough are unevenly distributed along the longitudinal direction of the at least one mixing trough.

In order to easily achieve the above mentioned horizontal liquid flow and preferably horizontal liquid flow with a controlled and appropriate horizontal liquid flow velocity, it is suggested in a further embodiment of the present invention that the number of discharge openings and/or the surface area of the discharge openings of a segment being arranged - seen in the longitudinal direction of the at least one mixing trough - at one side and more preferably close to one longitudinal end of the at least one mixing trough is higher or lower than the number of discharge openings and/or the surface area of the discharge openings of a segment being arranged - seen in the longitudinal direction of the at least one mixing trough - at the corresponding position on the opposite side of the at least one mixing trough, wherein corresponding position means that the horizontal distance between the segment at the one side and the closest longitudinal end of the at least one mixing trough is the same as the distance between the segment being arranged at the corresponding position on the opposite side and the opposite longitudinal end of the at least one mixing trough. Thereby, it is achieved that a different volume of liquid flows per time period through the discharge openings of this segment being arranged at the respective position on one (longitudinal) side of the at least one mixing trough compared to the volume of liquid flowing per time period through the discharge openings of the segment being arranged at the corresponding position on the opposite (longitudinal) side of the at least one mixing trough. On account of this different liquid flows on both (longitudinal) sides of the at least one mixing trough, seen in the longitudinal direction of the mixing trough, a horizontal liquid flow in the at least one mixing trough results, which can be reliably and easily optimized by respectively defining the number and sizes of the discharge openings in the respective segments.

In view of this, it is preferred that at least one mixing trough comprises, seen in the longitudinal direction of the at least one mixing trough, a plurality of segments each comprising a cluster of discharge openings, wherein between each two adjacent segments comprising a cluster of discharge openings a segment being free of discharge openings is provided, wherein a segment comprising a cluster of discharge openings being arranged - seen in the longitudinal direction of the at least one mixing trough - at one side and more preferably close to one longitudinal end of the at least one mixing trough has a higher or a lower total discharge opening surface area than the total discharge opening surface area of a segment comprising a cluster of discharge openings being arranged - seen in the longitudinal direction of the at least one mixing trough - at the corresponding position on the opposite side of the at least one mixing trough. Preferably a segment comprising a cluster of discharge openings being arranged - seen in the longitudinal direction of the at least one mixing trough - at one side and more preferably close to one longitudinal end of the at least one mixing trough has a total discharge opening surface area being 10 to 10,000%, more preferably 200 to 300% and most preferably 150 to 250% larger than the total discharge opening surface area of a segment comprising a cluster of discharge openings being arranged - seen in the longitudinal direction of the at least one mixing trough - at the corresponding position on the opposite side of the at least one mixing trough. Total discharge opening surface area means in this connection the sum of the surface areas of all discharge openings provided in the respective segment. Thus, in this embodiment the at least one mixing trough comprises, again seen in the longitudinal direction of the at least one mixing trough from one end to the other end, the sequence segment without cluster of discharge opening - (segment with cluster of discharge opening - segment without cluster of discharge opening)ₙ, wherein n is an integer of 2 or more denoting the number of repetitions of the sequence segment with cluster of discharge opening - segment without cluster of discharge opening. Preferably, n is an integer of 2 to 100, more preferably of 5 to 50 and most preferably of 10 to 30. Again, the discharge openings are preferably provided in the bottom wall of the at least one mixing trough. A cluster of discharge openings means two or more discharge openings. For instance, a segment of the bottom wall of the at least one mixing trough may comprises 2 to 100 and preferably 10 to 50 discharge openings.

Even more preferably, in the aforementioned embodiment the first segment comprising a cluster of discharge openings has a larger total discharge opening surface area than that of the last segment comprising a cluster of discharge openings. Preferably, the first segment comprising a cluster of discharge openings has a total discharge opening surface area being 10 to 10,000%, more preferably 200 to 300% and most preferably 150 to 250% larger than the total discharge opening surface area of the last segment comprising a cluster of discharge openings.

Apart from the aforementioned segment of the mixing trough comprising a cluster of discharge openings being arranged - seen in the longitudinal direction of the at least one mixing trough - at one side and more preferably close to one longitudinal end of the at least one mixing trough having a higher total discharge opening surface area than the total discharge opening surface area of a segment comprising a cluster of discharge openings being arranged - seen in the longitudinal direction of the at least one mixing trough - at the corresponding position on the opposite side of the at least one mixing trough, it is preferred that the total discharge opening surface areas of the remaining segments of the mixing trough comprising a cluster of discharge openings vary in dependency of the length of the distributor member of the liquid distribution means so that the total discharge opening surface areas of the segments increase from each of both ends towards to mid of the mixing trough.

In a further development of the idea of the present invention, it is suggested that for each segment of the bottom wall of the at least one mixing trough comprising a cluster of discharge openings - i) except the segment of the mixing trough comprising a cluster of discharge openings being arranged at one side of the at least one mixing trough having a higher total discharge opening surface area than the total discharge opening surface area of a segment comprising a cluster of discharge openings being arranged at the corresponding position on the opposite side of the at least one mixing trough and/or ii) except the segment of the mixing trough comprising a cluster of discharge openings being arranged at the corresponding position on the opposite side of the at least one mixing trough -, the ratio of the total discharge opening surface area of the segment comprising a cluster of discharge openings divided by the length of the distributor member of the liquid distribution means being closest to the segment is essentially the same. Essentially the same ratio of the total discharge opening surface area of the segments comprising a cluster of discharge openings divided by the length of the distributor member of the liquid distribution means being closest to the segments means in this connection that the respective ratio of each of the segments comprising a cluster of discharge openings - i) except the segment of the mixing trough comprising a cluster of discharge openings being arranged at one side of the at least one mixing trough having a higher total discharge opening surface area than the total discharge opening surface area of a segment comprising a cluster of discharge openings being arranged at the corresponding position on the opposite side of the at least one mixing trough and/or ii) except the segment of the mixing trough comprising a cluster of discharge openings being arranged at the corresponding position on the opposite side of the at least one mixing trough - is 50 to 150%, preferably 75 to 125%, most preferably 90 to 110% and most preferably about 100% of the average of all the respective ratios of all segments comprising a cluster of discharge openings. The ratio for the segment of the mixing trough comprising a cluster of discharge openings being arranged at one side of the at least one mixing trough having a higher total discharge opening surface area than the total discharge opening surface area of a segment comprising a cluster of discharge openings being arranged at the corresponding position on the opposite side of the at least one mixing trough, is preferably 30 to 200%, more preferably 40 to 150% and still more preferably 50 to 100% higher than the largest ratio for the other segments comprising a cluster of discharge openings and/or ratio for the segment of the mixing trough comprising a cluster of discharge openings being arranged at the corresponding position on the opposite side of the at least one mixing trough is preferably 30 to 200%, more preferably 40 to 150% and still more preferably 50 to 100% lower than the largest ratio for the other segments comprising a cluster of discharge openings.

Good results are in particular achieved, when each of the segments comprising a cluster of discharge openings - except the segment of the mixing trough comprising a cluster of discharge openings being arranged at one side of the at least one mixing trough having a higher total discharge opening surface area than the total discharge opening surface area of a segment comprising a cluster of discharge openings being arranged at the corresponding position on the opposite side of the at least one mixing trough - comprises 1 to 100 and preferably 3 to 30 discharge openings.

It is further preferred that each of the segments comprising a cluster of discharge openings - except the segment of the mixing trough comprising a cluster of discharge openings being arranged at one side of the at least one mixing trough having a higher total discharge opening surface area than the total discharge opening surface area of a segment comprising a cluster of discharge openings being arranged at the corresponding position on the opposite side of the at least one mixing trough - comprises discharge openings, each of which having an opening surface are of 0.001 to 9.3 mm² and preferably 0.006 to 1.8 mm².

In accordance with a further preferred embodiment of the present invention, the segment of the mixing trough comprising a cluster of discharge openings being arranged at one side of the at least one mixing trough having a higher total discharge opening surface area than the total discharge opening surface area of a segment comprising a cluster of discharge openings being arranged at the corresponding position on the opposite side of the at least one mixing trough comprises 2 to 20 and preferably 4 to 8 discharge openings.

In a further development of the idea of the present invention, it is suggested that the segment of the mixing trough comprising a cluster of discharge openings being arranged at one side of the at least one mixing trough having a higher total discharge opening surface area than the total discharge opening surface area of a segment comprising a cluster of discharge openings being arranged at the corresponding position on the opposite side of the at least one mixing trough comprises discharge openings, each of which having an opening surface are of 0.001 to 9.3 mm² and preferably 0.006 to 1.8 mm², whereas the cluster of discharge openings being arranged at the corresponding position on the opposite side of the at least one mixing trough comprises discharge openings, each of which having an opening surface are of 0.001 to 9.3 mm² and preferably 0.006 to 1.8 mm².

The discharge openings of the at least one mixing trough may have any form, such as a circular, square, rectangular, trapezoidal, oval, polygonal or irregular cross-section. The same is preferred for the discharge openings of the one or more collector members and for the discharge openings of the one or more distributor members. Preferably, the discharge openings have a circular cross-section.

The number of segments comprising a cluster of discharge openings provided in the at least one mixing trough is preferably correlated with the number of distributor members. Preferably, the sum of segments comprising a cluster of discharge openings of all mixing troughs is 30 to 90%, more preferably 40 to 70%, even more preferably 50 to 70% and most preferably about 50% of the number of distributor members.

In accordance with the present invention, the liquid distributor system comprises at least one mixing trough. The number of mixing troughs depend on the cross-sectional size of the liquid distributor system and thus of the cross-sectional size of the mass transfer column, in which the liquid distributor system in accordance with the present invention shall be used. For instance, the liquid distributor system comprises 1 to 5, preferably 1 to 3 and more preferably 1 or 2 mixing troughs. If the liquid distributor system comprises 2 or more mixing troughs, it is preferred that the longitudinal directions of all mixing troughs are at least essentially parallel to each other, wherein at least essentially parallel means that the angles between the longitudinal directions of each of the mixing troughs and the longitudinal direction of all other mixing troughs are -20 to +20°, preferably -10 to +10°, more preferably -5 to +5° and most preferably 0°.

In accordance with the present invention, the liquid distributor system comprises a liquid distribution means comprising one or more distributor members comprising a plurality of discharge openings. Preferably, each of the one or more distributor members of the liquid distribution means comprises a plurality of discharge openings. A plurality of discharge openings means in this connection two or more, preferably at least 5 and more preferably at least 10 discharge openings.

The present invention is not particularly limited concerning the shape, dimensions and arrangement of the one or more distributor members in the liquid distribution means of the liquid distributor system. Preferably, the liquid distribution means comprises a plurality of distributor members, all of which or all except one of which, namely preferably except the subsequently described central distributor member, having three side walls and a bottom wall, wherein the plurality of discharge openings is provided in the bottom wall. All of the aforementioned walls are preferably liquid-tightly connected with each other.

Good results are in particular obtained, when the liquid distribution means comprises a central distributor member extending, seen in the top view of the liquid distribution means, from one end to an opposite end of the liquid distribution means, thereby subdividing the liquid distribution means into two essentially equally sized halves, and a plurality of lateral distributor members, each of which having the form of a one-side open hollow trough having three side walls and a bottom wall being liquid-tightly connected with each other, wherein the plurality of discharge openings is provided in the bottom walls of all central and lateral distributor members, and wherein the top surfaces of all central and lateral distributor members being opposite to the bottom wall are open. Essentially equally sized halves means that both halves of the liquid distribution means differ in their area by not more than 20%, preferably not more than 10%, more preferably not more than 5% and most preferably have the same area. All lateral distributor members are preferably oriented with their longitudinal direction at least essentially perpendicular to the longitudinal direction of the central distributor member. At least essentially perpendicular means that the angle between the longitudinal direction of each of the lateral distributor members of the liquid distribution means and the longitudinal direction of the central distributor member is 70 to 110°, preferably 80 to 100°, more preferably 85 to 95° and most preferably 90°.

In addition, it is preferred that each of the lateral distributor members is connected with its open end, i.e. with its end being not closed by one of the three side walls, with the central distributor member so that fluid may flow from the central distributor member into each of the lateral distributor members. The central distributor member is thus in principle a distributor feeding the lateral distributor members, that is why the central distributor member may be also denoted as main trough.

In principle, the present invention is not particularly limited concerning the shape of the central distributor member. For instance, the central distributor member may have a square, rectangular, trapezoidal, oval, polygonal or irregular cross-section, i.e. the bottom wall has, seen in top view, a square, rectangular, trapezoidal, oval, polygonal or irregular cross-section. However, it is preferred that the central distributor member has a rectangular cross-section.

The present invention is also not particularly limited concerning the shape of the lateral distributor members. For instance, the one or more lateral distributor members may have a square, rectangular, trapezoidal, oval, polygonal or irregular cross-section, i.e. the bottom wall has, seen in top view, a square, rectangular, trapezoidal, oval, polygonal or irregular cross-section. If the liquid distribution means of the liquid distributor system comprises two or more lateral distributor members, preferably all of the lateral distributor members have a respective cross-section. More preferably, the one or more lateral distributor members have a square or rectangular cross-section and most preferably a rectangular cross-section.

In a further development of the idea of the present invention, it is proposed that the liquid distribution means of the liquid distributor system comprises X · 2 lateral distributor members, with X being an integer of 1 or more, and further the aforementioned central distributor member, wherein one half of the lateral distributor members is arranged, seen in the longitudinal direction of the central distributor member, on one side of the at least one central distributor member and the other half of the lateral distributor members is arranged on the other side of the central distributor member. Preferably, X is preferably an integer of 2 to 100, more preferably of 3 to 50 and most preferably of 4 to 20.

In accordance with an alternative embodiment of the present invention, the liquid distribution means does not comprise a central distributor member, but (only) a plurality of (lateral) distributor members, each of which extending from one side to the opposite side of the liquid distribution means and each of which having the form of a hollow trough having four side walls and a bottom wall being liquid-tightly connected with each other, wherein the plurality of discharge openings is provided in the bottom walls of all distributor members, and wherein the top surfaces of all distributor members being opposite to the bottom wall are open. Furthermore, it is preferred that all of the distributor members are arranged at least essentially parallel to each other, wherein at least essentially parallel to each other means that the angle between the longitudinal directions of adjacent distributor members is less than 10°, more preferably less than 5° and most preferably 0°. In this embodiment of the present invention, a main trough is arranged on the top of the liquid distribution means, wherein the main trough comprises four sidewalls and a bottom wall with discharge openings. Preferably, the main trough is arranged with its longitudinal direction at least essentially perpendicular to the longitudinal directions of the distributor members and is oriented so as to subdivide the below liquid distribution means into two essentially equally sized halves, wherein essentially equally sized halves means that both halves of the below liquid distribution means differ in their area by not more than 20%, preferably not more than 10%, more preferably not more than 5% and most preferably have the same area.

In accordance with a further particularly preferred embodiment of the present invention, the liquid distribution means of the liquid distributor system further comprises at least one pre-distributor trough. The terms mixing trough and pre-distributor trough actually mean merely a trough, wherein the prefix "mixing" or "pre-distributor" is merely used herein to easily distinguish between the two troughs. Thus, the mixing trough may have the same or a different shape and the same or different dimensions as the pre-distributor trough.

Good results are in particularly obtained, when the at least one pre-distributor trough has the form of a hollow trough having four side walls and a bottom wall being liquid-tightly connected with each other, wherein the bottom wall comprises a plurality of openings, and wherein the top surface of the at least one pre-distributor trough being opposite to the bottom wall is open. If the liquid distributor system in accordance with the present invention comprises two or more pre-distributor troughs, preferably all of the pre-distributor troughs are embodied as set out above. The two opposite sidewalls extending in the longitudinal direction of the at least one pre-distributor trough may have an upper edge having a sawtooth pattern.

Preferably, the at least one pre-distributor trough has a square, rectangular, trapezoidal, oval, polygonal or irregular cross-section, i.e. the bottom wall has, seen in top view, a square, rectangular, trapezoidal, oval, polygonal or irregular cross-section. More preferably, the at least one pre-distributor trough has a square or rectangular cross-section and most preferably a rectangular cross-section.

The purpose of the at least one pre-distributor trough is to receive the liquid from the at least one mixing trough, to buffer the liquid, before the liquid flows through the discharge openings of the pre-distributor trough into the central distributor member of the liquid distribution means, from which the liquid is distributed into the one or more lateral distributor members. Another function of the pre-distributor trough is to counter the horizontal flow which is created by the mixing trough so that the velocity in the direction of the central distributor member or main trough, respectively, is cancelled and the velocity is close to 0 after entering the central distributor member or main trough, respectively. The provision of the at least one pre-distributor trough is particularly preferred for comparable large liquid distributor systems having a diameter of more than 2 meters, but less preferred for smaller distributor systems. Because all of the lateral distributor members are connected with the central distribution member, the hydrostatic head above each of the discharge openings of the distributor members is at least approximately the same, which allows to equalize the hydraulics.

In a further development of the idea of the present invention, it is proposed that at least one mixing trough comprises, seen in the longitudinal direction of the at least one mixing trough, a plurality of segments each comprising a cluster of discharge openings, wherein between each two adjacent segments comprising a cluster of discharge openings a segment being free of discharge openings is provided, and wherein each of the segments comprising a cluster of discharge openings is arranged above the at least one pre-distributor trough so that liquid contained in the each of the segments comprising a cluster of discharge openings flows through the discharge openings into the at least one pre-distributor trough.

Good results are in particular obtained, when the at least one mixing trough and the at least one pre-distributor trough are aligned on top of each other, with the at least one pre-distributor trough being arranged below the at least one mixing trough. This embodiment reliably assures that liquid being contained in the at least one mixing trough flows through its plurality of discharge openings into the at least one pre-distributor trough of the liquid distribution means, from which it is distributed into the central distributor member and from there further into the one or more lateral distributor members.

If the liquid distributor system comprises 2 or more mixing troughs, it is preferred that the liquid distributor system comprises the same number of pre-distributor troughs, wherein the longitudinal directions of all mixing troughs are at least essentially parallel to each other and the longitudinal directions of all pre-distributor troughs are at least essentially parallel to each other, and wherein each of the mixing troughs is aligned with one of the pre-distributor troughs on top of each other. Even more preferably, the longitudinal directions of all mixing troughs and of all pre-distributor troughs are at least essentially parallel to each other. At least essentially parallel means that the angles between the longitudinal directions of each of the mixing troughs and the longitudinal direction of all other mixing troughs are - 20 to +20°, preferably -10 to +10°, more preferably -5 to +5° and most preferably 0°.

It is further preferred that the bottom wall of the at least one pre-distributor trough has at least essentially the same length and width as the at least one mixing trough, with which it is aligned on top of each other. At least essentially the same length and width means in this connection that the length and width of the at least one pre-distributor trough do not differ by more than 10%, preferably not more than 5% and most preferably not at all from the length and width of the at least one mixing trough.

Good results are in particular obtained, when the at least one pre-distributor trough, the at least one mixing trough and the central distribution member are aligned on top of each other, with the at least one pre-distributor trough being arranged below the at least one mixing trough and with the central distribution member being arranged below the at least one pre-distributor trough. Thereby, it is assured that liquid being contained in the at least one mixing trough flows through the plurality of discharge openings of the at least one mixing trough into the at least one pre-distributor trough and through the plurality of discharge openings of the at least one pre-distributor trough into the central distribution member, from which the liquid is distributed into the lateral distributor member(s) of the distribution means. Furthermore, it is preferred that all of these troughs have the same shape and dimensions. In particular, it is preferred that the bottom wall of the at least one pre-distributor has at least essentially the same length and width as the at least one mixing trough and the central distribution member, wherein at least essentially the same length and width means in this connection that the length and width of all troughs/members do not differ by more than 10%, preferably not more than 5% and most preferably not at all from each other.

In accordance with the present invention, the liquid distributor system comprises a liquid collection means comprising one or more collector members, each of which comprising one or more discharge openings. Thus, each of the one or more collector members of the liquid distribution means comprises one or a plurality of discharge openings. A plurality of discharge openings means in this connection two or more, preferably at least 5 and more preferably at least 10 discharge openings.

Preferably, the discharge openings of the collector members are oversized with regard to the intended use, in order to achieve that the liquid flow over the discharge openings is not a submerged liquid flow. Thereby, the height of the collector members may be as low as possible. In view of this, it is preferred that the total surface area of all of the one or more discharge openings of each of the one or more collector members is 10 to 40 cm² and more preferably 5 to 20 cm².

In accordance with a further particular preferred embodiment of the present invention, the longitudinal direction of each of the at least one collector member of the liquid distribution means of the liquid distributor system is at least essentially perpendicular to the longitudinal direction of the at least one mixing trough so that each of the at least one collector member crosses the at least one mixing trough being arranged below the liquid collection means, wherein at least essentially perpendicular means that the angle between the longitudinal direction of each of the collector members of the liquid distribution means and the longitudinal direction of the at least one mixing trough is 70 to 110°, preferably 80 to 100°, more preferably 85 to 95° and most preferably 90°.

Preferably, the liquid collection means comprises a plurality of collector members, each of which having four side walls and a bottom wall being liquid-tightly connected with each other, wherein the one or more discharge openings are provided in the bottom wall, and wherein all of the collector members are arranged at least essentially parallel to each other. At least essentially parallel means that the angles between adjacent collector members are -20 to +20°, preferably -10 to +10°, more preferably -5 to +5° and most preferably 0°.

The collector members may have a square, rectangular, trapezoidal, oval, polygonal or irregular cross-section, i.e. the bottom wall has, seen in top view, a square, rectangular, trapezoidal, oval, polygonal or irregular cross-section. More preferably, the collector members have a square or rectangular cross-section and most preferably a rectangular cross-section.

In order to efficiently collect liquid flowing from above downwardly, it is suggested in a further development of the idea of the present invention that one of the side walls of each of the liquid collector members of the liquid distributor system is connected at its upper edge with a collection plate being inclined with regard to the side wall (and preferably extending over the whole length of the side wall), wherein the angle between the plate and the side wall is 30 to 60°, preferably 40 to 50° and most preferably 45°, and wherein the height of the collection plate is at least 2-times and preferably at least 3-times the height of the side wall. The collection plate may be any plate. The prefix "collection" is only used for distinguishing it from optional other plates being arranged at other locations of the liquid collector system. Preferably, the respective the side wall of each of the liquid collection means is connected over its whole length with the collection plate.

In addition, it is preferred that each of the collection plates of the collector members of the liquid collection means of the liquid distributor system is connected at its upper edge with a further plate being at least essentially parallel to the side wall of the collector member and preferably extending over the whole length of the collection plate. At least essentially parallel means that the angle between a further plate and its corresponding side wall is -20 to +20°, preferably -10 to +10°, more preferably -5 to +5° and most preferably 0°. Preferably, the height of the further plate is 1- to 3-times the height of the side wall of the collector member, with which the collection plate and the further plate are connected.

In accordance with a further preferred embodiment of the present invention, all of the one or more discharge openings of each of the one or more collector members of the liquid collection means are arranged at a location at which the respective collector member crosses the at least one mixing trough being arranged below the liquid collection means. This assures that all of the liquid being collected in the liquid collection means flows into the at least one mixing trough.

Preferably, each of the one or more collector members of the liquid collection means is arranged vertically above a (lateral) distributor member of the liquid distribution means. Moreover, each of the one or more collector members and a (lateral) distributor member may be aligned on top of each other. Alternatively, the number of collector members may be less than the number of (lateral) distributor member, so as to save costs without affecting the distribution quality.

In accordance with a further aspect, the present invention relates to a mass transfer column, wherein the mass transfer column includes at least one packing and at least one aforementioned liquid distributor system. The at least one packing is preferably at least one random packing bed or at least one structured packing bed and more preferably at least one structured packing bed. Furthermore, it is preferred that the mass transfer column comprises 2 to 10 and even more preferably 2 to 3 random packing beds or most preferred structured packing beds.

Preferably, the mass transfer column is embodied for the use as absorption column, stripping column, scrubbing column or distillation column and most preferably as an air separation unit.

In accordance with still a further aspect, the present invention relates to a method for separating at least two fluids, wherein the method is performed with at least one aforementioned mass transfer column.

Preferably, the method comprises the separation of the at least two fluids by absorption, stripping, scrubbing or distillation. More preferably, the method comprises air separation in an air separation unit

In accordance with a particular preferred embodiment of the present invention, the horizontal velocity in the at least one mixing trough is during the method from 0 to 0.8 m/s, preferably 0.01 to 0.7 m/s, still more preferably 0.02 to 0.6 m/s and most preferably 0.05 to 0.5 m/s.

Subsequently, the present patent application is described by way of example with reference to advantageous embodiments and to the enclosed drawings.

There is shown:

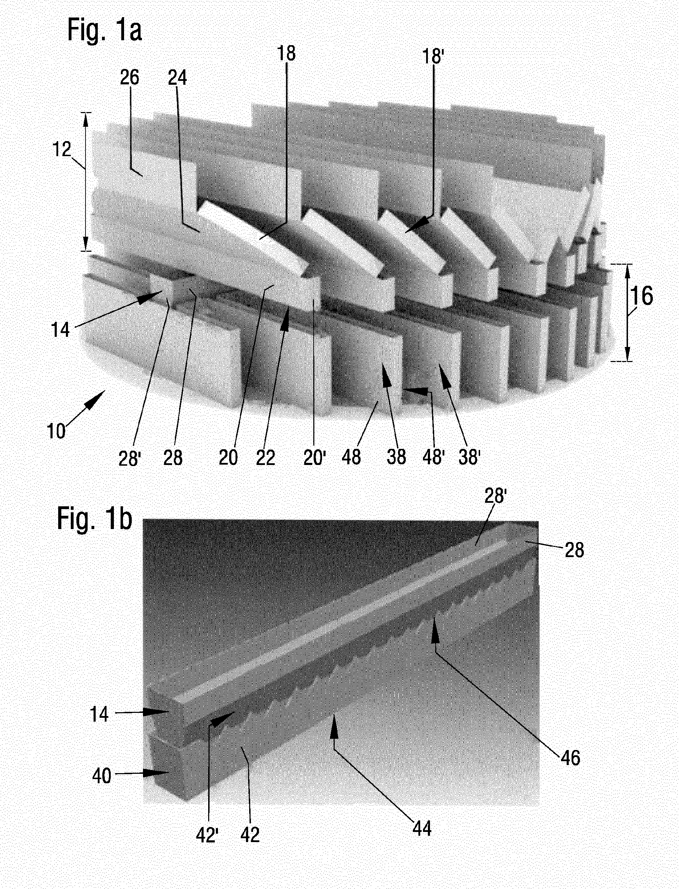

- Fig. 1a: A schematic perspective view of a liquid distributor system in accordance with one embodiment of the present invention.
- Fig. 1b: A schematic perspective view of the mixing trough and pre-distributor trough included in the liquid distributor system shown in figure 1a.

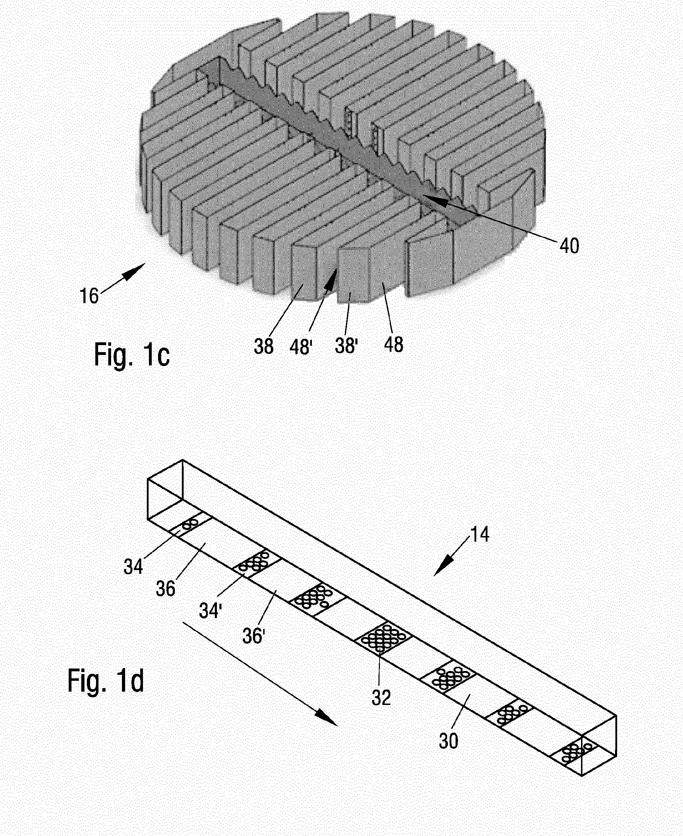

- Fig. 1c: A schematic perspective view of the liquid distribution means of the liquid distributor system shown in figure 1a.
- Fig. 1d: A schematic perspective view of a portion of the mixing trough and the horizontal liquid flow generated therein during the operation of the liquid distributor system shown in figure 1a.

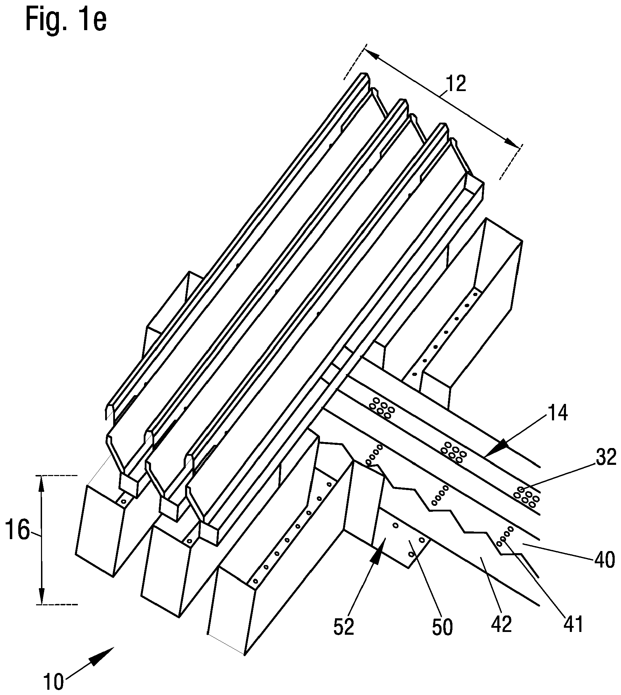

- Fig. 1e: A schematic perspective view of a section of the liquid distributor system shown in figure 1a .

The liquid distributor system 10 shown in fig. 1a to 1e comprises a liquid collection means 12, a mixing trough 14 and a liquid distribution means 16, which are arranged on top of each other, with the liquid collection means 12 being arranged above the mixing trough 14 and with the mixing trough 14 being arranged above the liquid distribution means 16.

The liquid collection means 12 comprises several collector members 18, 18', all of which being arranged parallel to each other. Each of the collector members 18, 18' comprises four side walls 20, 20' and a bottom wall 22 being liquid-tightly connected with each other. The bottom wall has a rectangular cross-section and comprises one discharge opening (not shown). One of the side walls 20 of each of the collector members 18, 18' is connected at its upper edge with a collection plate 24, wherein each collection plate 24 is inclined in an angle of about 45° with regard to the side wall 20. The height of each collection plate 24 is about 5-times the height of the corresponding side wall 20. Moreover, each of the collection plates 24 of the collector members 18, 18' is connected at its upper edge with a further plate 26, which is oriented parallel to the corresponding side wall 20 of the collector member 18, 18'. In addition, the height of each of the further plates 26 is about 2-times the height of the corresponding side wall 20 of the collector member 18, 18', with which the collection plate 24 and the further plate 26 are connected.

In turn, the mixing trough 14 of the liquid distributor system 10 has the form of a hollow trough having four side walls 28, 28' and - as shown in figure 1d - a bottom wall 30 being fluid-tightly connected with each other, wherein the top surface of the mixing trough 14 being opposite to the bottom wall 30 is open. A plurality of circular discharge openings 32 is provided in the bottom wall 30 of the mixing trough 14. The height of the mixing trough 14 is about 20 cm, whereas the liquid distributor system has a height of about 30 cm. The mixing trough 14 is arranged below the liquid collection means 12 and is oriented so that its longitudinal direction is perpendicular to the longitudinal direction of the collector members 18, 18'. The discharge openings of the collector members 18, 18' are arranged at a location at which the respective collector member crosses the mixing trough 14 being arranged below the liquid collection means 18, 18' so that during the operation of the liquid distributor system 10 liquid being contained in the collector members 18, 18' flows through the discharge openings of the collector members 18, 18' into the mixing trough 14.

Furthermore, the liquid distribution means 16 comprises a plurality of lateral distributor members 38, 38', as in particular shown in figure 1e a central distributor member 50 comprising in its bottom wall discharge openings 52 and - as shown in figures 1b and 1c - a pre-distributor trough 40. While the central distributor member 50 extends, seen in the top view of the liquid distribution means 16, from one end to an opposite end of the liquid distribution means 16, thereby subdividing the liquid distribution means 16 into two equally sized halves, the plurality of lateral distributor members 38, 38' extend perpendicular to the central distributor member 50. The pre-distributor trough 40 has the form of a hollow trough having four side walls 42, 42' and a bottom wall 44 being fluid-tightly connected with each other, wherein the top surface of the pre-distributor trough 40 being opposite to the bottom wall 44 is open. As seen in figure 1e, the bottom wall 44 of the pre-distributor trough 40 comprises a plurality of discharge openings 41. Moreover, the two sidewalls 42, 42' of the pre-distributor trough 40 extending in the longitudinal direction of the of the pre-distributor trough 40 each comprises a plurality of v-shaped notches 46, i.e. the upper edges of the two sidewalls 42, 42' of the pre-distributor trough 40 have a sawtooth pattern, which allows liquid contained in the pre-distributor trough 40 to flow through the discharge openings 41 as well as over the two sidewalls 42, 42', if a respective high liquid level is adjusted in the pre-distributor trough 40, into the below central distributor member 50 and from there into the adjacent lateral distributor members 38, 38'. The cross-sectional form and the length and width of the pre-distributor through 40 are close to those of the mixing trough 14. Moreover, the pre-distributor trough 40 and the mixing trough 14 are aligned on top of each other, with the pre-distributor trough 40 being arranged below the mixing trough 14, and both are arranged above the central distributor member 50. Thus, during the operation of the liquid distributor system 10, liquid being contained in the mixing trough 14 flows through the discharge openings 32 into the pre-distributor trough 40, from there mainly through the discharge openings 41 and the remaining portion over the v-shaped notch 46 into the central distributor member 50 and from there into the adjacent lateral distributor members 38, 38'. Each of the lateral distributor members 38, 38' comprises three side walls 48, 48' and a bottom wall (not shown) being liquid-tightly connected with each other. The bottom wall has a rectangular cross-section and comprises discharge openings (not shown). The longitudinal direction of the pre-distributor trough 40 is perpendicular to the longitudinal direction of the lateral distributor members 38, 38'. One half of the distributor members 38, 38' is arranged, seen in the longitudinal direction of the central distributor means 50 and of the pre-distributor trough 40, respectively, on one side of the central distributor means 50 and on one side of the pre-distributor trough 40 and the other half of the lateral distributor members 38, 38' is arranged on the other side of the central distributor means 50 and on the other side of the pre-distributor trough 40. Each of the lateral distributor members 38, 38' is arranged below one collector member 18, 18'.

The number of discharge openings 32 of the mixing trough 14 is unevenly distributed along the longitudinal direction of the mixing trough 14, wherein all discharge openings 32 have the same diameter. As shown in figure 1d, the mixing trough 14 comprises, seen in the longitudinal direction of the mixing trough 14, a plurality of segments 34, 34' each comprising a cluster of discharge openings 32, wherein between each two adjacent segments 34, 34' comprising a cluster of discharge openings 32 a segment 36, 36' being free of discharge openings 32 is provided. The left segment 34 comprising a cluster of discharge openings 32 being closest to the left longitudinal end of the mixing trough 14 of all segments 34, 34' comprising a cluster of discharge openings 32 has only 2 discharge openings 32 and thus the lowest number of discharge openings 32 of all segments 34, 34' comprising a cluster of discharge openings 32. All other all segments 34' comprising a cluster of discharge openings 32 comprise 6 to 12 discharge openings 32, wherein the number of discharge openings 32 increases from the left side of the mixing trough 14 until the middle of the mixing trough 14 and then decreases from the middle of the mixing trough 14 to the right end of the mixing trough 14. More specifically, except for the left segment 34 comprising two discharge openings 32 and except for the right segment being arranged at the opposite end of the mixing trough 14 comprising six discharge openings 32, the number of discharge openings of the segments 34' comprising a cluster of discharge openings 32 are proportional to the lengths of the distributor members 38, 38' being arranged below the mixing trough 14. Thus, for these segments 34' the ratio of the total discharge opening surface area of each segment 34' comprising a cluster of discharge openings 32 divided by the length of the distributor member 38, 38' of the liquid distribution means being closest to the segment 34' is essentially the same, whereas the respective ratio for the left segment 34 is reduced and that for the right segment being arranged at the opposite end of the mixing trough 14 is increased.

During the operation of the liquid distributor system 10, liquid flowing downwardly from above the collection means 12 contacts one of the collection plates 24 of the collector members 18, 18' of the collection means 12, flows down collection plates 24 into the hollow trough formed of the sidewalls 20, 20' of the collector members 18, 18' and from there into the mixing trough 14. Since the discharge openings of the collector members 18, 18' are oversized with regard to the intended use, the liquid flow over the discharge openings is not a submerged liquid flow. Thereby, the height of the collector members 18, 18' may be as low as possible. As set out above, the total discharge opening surface area of the left segment 34 comprising a cluster of discharge openings 32 of the mixing trough 14, which comprises only two discharge openings, is far less than the total discharge opening surface area of all other segments 34' comprising a cluster of discharge openings 32, which comprise 6 to 12 discharge openings 32 of the same size. On account thereof, a horizontal liquid flow with a controlled and appropriate horizontal liquid flow velocity of 0.05 to less than 0.2 m/s along the longitudinal direction of the mixing trough 14 is adjusted, which - as shown by the arrow in fig. 1d - is directed from the longitudinal end of the mixing trough 14, which comprises the segment 34 comprising a cluster comprising two discharge openings 32, to the opposite longitudinal end of the mixing trough 14. Thereby, an efficient mixing of the liquid is achieved requiring only a minimum height of the mixing trough and thus of the liquid distributor system. This mixing efficiency is even enhanced by the liquid flow direction deflection resulting from the transfer of the liquid from the collection means 12 to the mixing trough 14. More specifically, the liquid flow in the individual collector members 18, 18' of the collection means 12 is directed from the longitudinal ends of the collector members 18, 18' to their mid, in which the discharge opening of each collector member 18, 18' is arranged. This liquid flow direction is then deflected in the mixing trough 14 by 90°, because the mixing trough 14 is oriented with its longitudinal direction perpendicular to the longitudinal directions of the individual collector members 18, 18' of the collection means 12. The liquid flows then through the discharge openings 32 from the mixing trough 14 downwardly into the pre-distributor trough 40. Since the total discharge opening surface area of the left segment 34 comprising a cluster of discharge openings 32 of the mixing trough 14 is far less than the total discharge opening surface area of all other segments 34' comprising a cluster of discharge openings 32, the volume of liquid being discharged at the segment 34 from the mixing trough 14 into the pre-distributor trough 40 is much lower than the respective volume of liquid being discharged at the remaining segments 34'. The horizontal flow which is created by the mixing trough is countered in the pre-distributor trough 40 so that the velocity is cancelled and the velocity is close to zero, when the liquid leaves the pre-distributor trough 40 and enters the central distributor member 50. Finally, the liquid flows from the central distributor member 50 into the individual distributor members 38, 38', in which a liquid flow is adjusted with a perpendicular direction, namely from the pre-distributor trough 40 to the longitudinal ends of the individual distributor members 38, 38' being opposite to the pre-distributor trough 40. All in all, the liquid distributor system in accordance with the present invention allows to achieve an optimal liquid distribution uniformity over the horizontal cross-section of the liquid distributor system as well as to an optimal liquid mixing performance at a minimal height of the liquid distributor system.

### Reference Numeral List

- 10: Liquid distributor system
- 12: Liquid collection means
- 14: Mixing trough
- 16: Liquid distribution means
- 18, 18': Collector member
- 20, 20': Side wall of a collector member
- 22: Bottom wall of a collector member
- 24: Collection plate of a collector member
- 26: Further plates of a collector member
- 28, 28': Side wall of the mixing trough
- 30: Bottom wall of the mixing trough
- 32: Discharge openings of a mixing trough
- 34, 34': Segment of the mixing trough comprising a cluster of discharge opening
- 36, 36': Segment of the mixing trough being free of discharge openings
- 38, 38': Lateral distributor member
- 40: Pre-distributor trough
- 41: Discharge opening of the pre-distributor trough
- 42, 42': Side wall of the pre-distributor trough
- 44: Bottom wall of the pre-distributor trough
- 46: V-shaped notch
- 48, 48': Side wall of a lateral distributor member
- 50: Central distributor member
- 52: Discharge opening of the central distributor member

## Claims

1. A liquid distributor system for a separation device, such as for a mass transfer column, in particular for a packing column for absorption, stripping, scrubbing or distillation, wherein the liquid distributor system comprises:
- a liquid collection means comprising one or more collector members, each of which comprising one or more discharge openings,
- a liquid distribution means comprising one or more distributor members comprising a plurality of discharge openings and
- at least one mixing trough comprising a plurality of discharge openings,
wherein the at least one mixing trough is arranged below the liquid collection means so that liquid being contained in the one or more collector members of the liquid collection means flows through at least one of the one or more of discharge openings of the one or more collector members into the at least one mixing trough, wherein the at least one mixing trough is arranged so that liquid being contained in the at least one mixing trough flows through at least one of the plurality of discharge openings of the at least one mixing trough into the liquid distribution means, and wherein the number of discharge openings and/or the surface area of the discharge openings of the at least one mixing trough are unevenly distributed.

2. The liquid distributor system in accordance with claim 1, wherein at least one mixing trough has the form of a hollow trough having four side walls and a bottom wall being liquid-tightly connected with each other, wherein the plurality of discharge openings is provided in the bottom wall, wherein the top surface of the at least one mixing trough being opposite to the bottom wall is open.

3. The liquid distributor system in accordance with claim 1 or 2, wherein at least one mixing trough comprises, seen in the longitudinal direction of the at least one mixing trough, a plurality of segments each comprising a cluster of discharge openings, wherein between each two adjacent segments comprising a cluster of discharge openings a segment being free of discharge openings is provided.

4. The liquid distributor system in accordance with claim 3, wherein a segment comprising a cluster of discharge openings being arranged - seen in the longitudinal direction of the at least one mixing trough - at one side and more preferably close to one longitudinal end of the at least one mixing trough has a higher or a lower total discharge opening surface area than the total discharge opening surface area of a segment comprising a cluster of discharge openings being arranged - seen in the longitudinal direction of the at least one mixing trough - at the corresponding position on the opposite side of the at least one mixing trough.

5. The liquid distributor system in accordance with claim 3 or 4, wherein a segment comprising a cluster of discharge openings being arranged - seen in the longitudinal direction of the at least one mixing trough - at one side and more preferably close to one longitudinal end of the at least one mixing trough has a total discharge opening surface area being 10 to 10,000%, preferably 200 to 300% and more preferably 150 to 250% larger than the total discharge opening surface area of a segment comprising a cluster of discharge openings being arranged - seen in the longitudinal direction of the at least one mixing trough - at the corresponding position on the opposite side of the at least one mixing trough.

6. The liquid distributor system in accordance with claim 3 to 5, wherein the at least one mixing trough comprises, seen in the longitudinal direction of the at least one mixing trough from one end to the other end, the sequence segment without cluster of discharge opening - (segment with cluster of discharge opening - segment without cluster of discharge opening)ₙ, wherein n is an integer of 2 or more denoting the number of repetitions of the sequence segment with cluster of discharge opening - segment without cluster of discharge opening, wherein n is preferably an integer of 2 to 100, more preferably of 5 to 50 and most preferably of 10 to 30.

7. The liquid distributor system in accordance with any of claims 3 to 6, wherein the total discharge opening surface area of each segment comprising a cluster of discharge openings - except the segment of the mixing trough comprising a cluster of discharge openings being arranged, seen in the longitudinal direction of the at least one mixing trough, at one side of the at least one mixing trough having a higher total discharge opening surface area than the total discharge opening surface area of a segment comprising a cluster of discharge openings being arranged, seen in the longitudinal direction of the at least one mixing trough, at the corresponding position on the opposite side of the at least one mixing trough and except the segment being arranged at the corresponding position on the opposite side of the at least one mixing trough - varies in dependency of the length of the distributor member of the liquid distribution means being closest to the segments comprising a cluster of discharge openings.

8. The liquid distributor system in accordance with claim 7, wherein for each segment comprising a cluster of discharge openings - i) except the segment of the mixing trough comprising a cluster of discharge openings being arranged at one side of the at least one mixing trough having a higher total discharge opening surface area than the total discharge opening surface area of a segment comprising a cluster of discharge openings being arranged at the corresponding position on the opposite side of the at least one mixing trough and/or ii) except the segment of the mixing trough comprising a cluster of discharge openings being arranged at the corresponding position on the opposite side of the at least one mixing trough - the ratio of the total discharge opening surface area of the segment comprising a cluster of discharge openings divided by the length of the distributor member of the liquid distribution means being closest to the segment is essentially the same.

9. The liquid distributor system in accordance with any of the preceding claims, wherein the liquid distribution means comprises a central distributor member extending, seen in the top view of the liquid distribution means, from one end to an opposite end of the liquid distribution means, thereby subdividing the liquid distribution means into two essentially equally sized halves, and a plurality of lateral distributor members, each of which having the form of a one-side open hollow trough having three side walls and a bottom wall being liquid-tightly connected with each other, wherein the plurality of discharge openings is provided in the bottom walls of all central and lateral distributor members, wherein the top surfaces of all central and lateral distributor members being opposite to the bottom wall are open, and wherein essentially equally sized halves means that both halves of the liquid distribution means differ in their area by not more than 20%, preferably not more than 10%, more preferably not more than 5% and most preferably have the same area.

10. The liquid distributor system in accordance with any of the preceding claims, wherein all lateral distributor members are oriented with their longitudinal direction at least essentially perpendicular to the longitudinal direction of the central distributor member, wherein at least essentially perpendicular means that the angle between the longitudinal direction of each of the lateral distributor members of the liquid distribution means and the longitudinal direction of the central distributor member is 70 to 110°, preferably 80 to 100°, more preferably 85 to 95° and most preferably 90°.

11. The liquid distributor system in accordance with any of the preceding claims, wherein the liquid distribution means further comprises at least one pre-distributor trough, wherein the at least one pre-distributor trough has the form of a hollow trough having four side walls and a bottom wall being liquid-tightly connected with each other, wherein the bottom wall comprises a plurality of openings, and wherein the top surface of the at least one pre-distributor trough being opposite to the bottom wall is open.

12. The liquid distributor system in accordance with claim 11, wherein the optional at least one pre-distributor trough, the at least one mixing trough and the at least one central distribution member are aligned on top of each other, with the at least one pre-distributor trough being arranged below the at least one mixing trough and with the at least one central distribution member being arranged below the at least one pre-distributor trough.

13. The liquid distributor system in accordance with any of the preceding claims, wherein the longitudinal direction of each of the at least one collector member of the liquid collection means is at least essentially perpendicular to the longitudinal direction of the at least one mixing trough so that each of the at least one collector member crosses the at least one mixing trough being arranged below the liquid collection means, wherein at least essentially perpendicular means that the angle between the longitudinal direction of each of the collector members of the liquid distribution means and the longitudinal direction of the at least one mixing trough is 70 to 110°, preferably 80 to 100°, more preferably 85 to 95° and most preferably 90°.

14. A mass transfer column, in particular for absorption, stripping, scrubbing or distillation and more preferably of an air separation unit, wherein the mass transfer column includes at least one packing and at least one liquid distributor system in accordance with any one of the preceding claims.

15. A method for separating at least two fluids, preferably for performing an absorption, stripping, scrubbing or distillation and more preferably an air separation in an air separation unit, wherein the method is performed with at least one mass transfer column in accordance with claim 14, wherein the horizontal velocity in the at least one mixing trough is 0 to 0.8 m/s, preferably 0.01 to 0.7 m/s, more preferably 0.02 to 0.6 m/s and most preferably 0.05 to 0.5 m/s.
